# EUROPEAN PATENT SPECIFICATION

(11) **EP 3 828 106 B1**
(45) Date of publication and mention of the grant of the patent: **14.08.2024**
(21) Application number: 20208647.6
(22) Date of filing: 19.11.2020
(51) Int. Cl.: B65G 19/02, B65G 54/02, B65B 21/18, B65G 17/32

(54) **TRANSPORT APPARATUS FOR CONTAINERS AND METHOD FOR HOOKING/UNHOOKING A SUPPORT FOR CONTAINERS TO/FROM A CARRIAGE**
TRANSPORTVORRICHTUNG FÜR BEHÄLTER UND VERFAHREN ZUM AN-/ABHÄNGEN EINES BEHÄLTERTRÄGERS AN EINEN BZW. VON EINEM WAGEN
APPAREIL DE TRANSPORT DE CONTENEURS ET PROCÉDÉ D'ACCROCHAGE/DÉCROCHAGE D'UN SUPPORT DE CONTENEURS À UN/D'UN CHARIOT

(30) Priority: 27.11.2019 IT 201900022260
(43) Date of publication of application: 02.06.2021
(73) Proprietor: G.D SOCIETA' PER AZIONI, 40133 Bologna (IT)
(72) Inventor: MARIANI, Luca, 40133 BOLOGNA (IT); DEGLIESPOSTI, Paolo, 40133 BOLOGNA (IT); TESTONI, Luca, 40133 BOLOGNA (IT); LANZARINI, Luca, 40133 BOLOGNA (IT)
(74) Representative: Studio Torta S.p.A.

(56) References cited:
- EP-A1- 2 544 974
- EP-B1- 2 544 974
- WO-A1-2019/180557
- US-B2- 8 360 492

## Description

### CROSS-REFERENCE TO RELATED APPLICATIONS

This Patent Application claims priority from Italian Patent Application No. 102019000022260 filed on November 27, 2019.

### TECHNICAL FIELD

The present invention relates to a transport apparatus for packaging machines of the pharmaceutical, cosmetic, tobacco or food industries. In particular, the present invention relates to a transport apparatus for containers such as phials, bottles, carpules, syringes, cartridges for electronic cigarettes or the like.

Moreover, the present invention relates to a method for hooking/unhooking a support for containers to/from a carriage in a transport apparatus for containers.

### PRIOR ART

As is known, transport systems in packaging machines move containers to be packaged through operating stations at which various operations are carried out on the containers such as, for example, filling, stopping, weighing.

The document WO2019/180557A1 discloses a transport apparatus for containers which comprises: a guide which defines a conveying path; a plurality of carriages which are coupled to the guide so as to slide along the guide in a conveying direction; a plurality of supports which each retain a container and which are each coupled to a relative carriage.

Each support is coupled to a relative carriage in a removable manner as it must be possible to replace the supports so as to allow changing the size of the containers to be packaged or washing/sterilizing the transport apparatus.

To such end, each support is fixed to the relative carriage by screws and bolts. However, the procedure for mounting/removing the supports requires a lot of time at the expense of the productivity of the packaging machine.

In order to overcome the aforementioned problem, a further transport apparatus is known, in which the coupling of each support to a relative carriage occurs by means of a pair of housings formed in the carriage and a pair of pins which are housed in relative seats formed in the support and which protrude from said seats pushed by elastic springs. Such pins, therefore, can fit elastically inside the seats. In said further transport apparatus, the carriage comprises a groove arranged above the pair of pins and intended to receive a coupling portion of the support: when the coupling portion of the support is inserted in the groove of the carriage, the support and the carriage are then constrained in the direction orthogonal to the conveying plane and in the direction parallel to the conveying direction.

Consequently, in order to hook each support to a carriage, it is necessary to drag the support and the carriage with respect to one another in order to insert the coupling portion of the support inside the groove of the carriage. Such dragging must be carried out up to carrying the pins of the carriage into the housings of the support.

It is evident that, during the dragging of the carriage and of the support, the pins fit into the relative seats until they face the relative housing; consequently, during the entire hooking step, the pins drag in the carriage. Analogously, such dragging also occurs in the unhooking step of the support from the carriage.

Such dragging entails a problem of wear of the pins and of the support, which leads to frequent maintenance. Moreover, the dragging of the pins on the carriage can cause the formation of dust which can pollute the environment of the transport apparatus and, consequently, the containers which the latter must transport. This is particularly problematic in the case where the transport apparatus is to be employed in the pharmaceutical sector.

The patent application EP2544974A1 discloses the preamble of claim 1 and describes an apparatus for the transport of objects and comprising: guide means for supporting and guiding, along a movement path, at least one carriage which supports a support element adapted to receive at least one object, and movement means for moving the carriage along the movement path.

### DESCRIPTION OF THE INVENTION

The object of the present invention is to provide a transport apparatus for containers and a relative method for hooking/unhooking a support for containers to/from a carriage capable of overcoming the aforementioned drawbacks.

In particular, the object of the present invention is to provide a transport apparatus and a relative method in which the hooking/unhooking of the carriages to the supports is rapid and, at the same time, not subject to the problems of wear found in the known transport apparatus.

The aforementioned objects have been achieved by means of a transport apparatus and a method for hooking/unhooking a support for containers to/from a carriage in which there is no dragging of the pins during the hooking/unhooking steps of the support to/from the carriage.

The aforementioned objects have been achieved by means of the transport apparatus and the method according to the appended claims.

Specifically, the transport apparatus object of the present invention comprises: a guide which defines a conveying path; a carriage which is coupled to the guide so as to slide along the guide in a conveying direction; a support which retains at least one container and which can be coupled in a removable manner to the carriage through coupling means; coupling means for removably coupling the support and the carriage, which removable coupling means comprise a housing and an engagement element which are mutually shaped so that at least a portion of the engagement element can be inserted into the housing.

The engagement element is housed in a relative seat formed in the carriage or in the support and is movable between an operative position, in which the engagement element protrudes from the seat to be able to engage the housing formed in the support or in the carriage, and a non-operative position, in which the engagement element is arranged retracted inside the seat.

Moreover, the proposed transport apparatus comprises control means for the control of the engagement element for moving the engagement element between the operative position and the non-operative position.

Consequently, the proposed transport apparatus allows controlling the position of the engagement element: during the hooking/unhooking steps of the support to/from the carriage, the engagement element is kept in the non-operative position so that it does not drag in the support or in the carriage. Advantageously, the proposed transport apparatus allows hooking/unhooking the support to/from the carriage in a rapid manner and without dragging so as to limit the problems of wear and formation of polluting dust.

According to a preferred embodiment, the coupling means comprise a reinforcing element integral with the carriage or with the support and at which the housing is formed. Advantageously, the wear resistance of the proposed transport apparatus is thus further improved.

According to a preferred embodiment, the portion of the engagement element that can be inserted in the housing and the housing are counter-shaped. Advantageously, the insertion of the engagement element into the housing is thus facilitated.

According to a preferred embodiment, the portion of the engagement element which can be inserted in the housing and the housing each comprise a conical or truncated-conical coupling surface. Advantageously, the conical or truncated-conical surface of the portion of the engagement element which can be inserted in the housing and of the housing allows an automatic centring of the engagement element in the housing.

According to a preferred embodiment, the coupling means comprise a groove which is formed in the carriage or in the support and a coupling portion which protrudes respectively from the support or from the carriage to engage in the groove. The groove and the coupling portion are mutually shaped so that the coupling portion can be inserted in the groove to constrain the carriage and the support in a first direction which is orthogonal to the conveying plane in which the guide lies and in a second direction which is parallel to the conveying direction. According to a preferred embodiment, the engagement element is movable in a moving direction which is orthogonal to the conveying plane in which the guide lies.

According to a preferred embodiment, the control means are carried by the carriage. In such case, the seat for housing the engagement element is preferably formed in the carriage.

According to a further embodiment, the control means are carried by the support. In such case, the seat for housing the engagement element is preferably formed in the support.

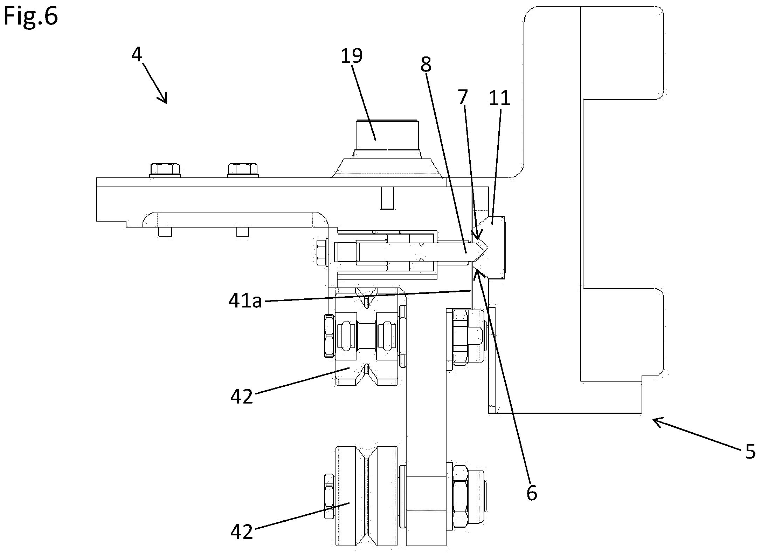

According to the invention, with particular reference to Figures 6-8, the control means comprise a first elastic element which has a development axis parallel to the moving direction of the engagement element and which has a first end arranged in contact with a fixed abutment and a second end which pushes the engagement element into the operative position. Consequently, the engagement element is controlled by the first elastic element.

With further reference to Figures 6-8, the control means comprise: a first member which carries the engagement element, which is movable in the moving direction of the engagement element and which is pushed by the first elastic element to keep the engagement element in the operative position; a second member which is movable in a direction orthogonal to the moving direction of the engagement element between a first position, in which it does not interfere with the first member, and a second position, in which it interferes with the first member so that the first member compresses the first elastic element and the engagement element is in the non-operative position. Advantageously, the control means are thus extremely simple and cost-efficient.

According to a preferred embodiment, the first member and the second member each comprise an interference surface which is tilted and, when the second member is in the second position, the interference surface of the second member abuts the interference surface of the first member.

According to a preferred embodiment, with particular reference to Figure 6, the control means comprise a second elastic element which has a development axis orthogonal to the moving direction of the engagement element and which acts on the second member to keep it in the first position. Consequently, the second member is controlled by the second elastic element.

With particular reference to Figure 6, the second member preferably comprises an access portion which is arranged externally with respect to the carriage or the support and which is accessible by an operator so that, by pressing the access portion, the second member is moved from the first position to the second position and, by releasing the access portion, the second member is pushed by the second elastic element into the first position. Advantageously, controlling the position of the engagement element is thus extremely simple and easy.

According to a preferred embodiment, the housing is integral with the support and the engagement element is housed in the seat formed in the carriage. Advantageously, such arrangement of the engagement element and of the housing allow hooking/unhooking the support to/from the carriage in a convenient and easy manner.

Moreover, the aforementioned objects have been achieved by means of a method for hooking/unhooking a support for containers according to the invention of the above mentioned transport apparatus to/from a carriage in which there is no dragging of the pins during the hooking/unhooking steps of the support to/from the carriage as occurred in the prior art.

Specifically, the method object of the present invention is such that the support and the carriage of the transport apparatus according to the invention can be coupled in a removable manner.

In particular, the method comprises the steps of: moving close/moving away the support and the carriage from each other, keeping the engagement element in the non-operative position, respectively to hook/unhook the support and the carriage; subsequently, to hook the support and the carriage, moving the engagement element into the operative position.

Consequently, the proposed method provides for controlling the position of the engagement element and keeping it in the non-operative position during the hooking/unhooking steps. Advantageously, the proposed method allows hooking/unhooking the support to/from the carriage in a rapid manner and with no dragging so as to limit the problems of wear and formation of polluting dust. According to a preferred embodiment, the coupling means comprise a groove which is formed in the carriage or in the support and a coupling portion which protrudes respectively from the support or from the carriage and in which the groove and the coupling portion are mutually shaped so that the coupling portion can be inserted in the groove to constrain the carriage and the support in a first direction which is orthogonal to the conveying plane in which the guide lies and in a second direction which is parallel to the conveying direction. In such embodiment, the step of moving close/moving away the support and the carriage from each other, keeping the engagement element in the non-operative position comprises the step of moving the support and the carriage in relation to one another in a direction parallel to the conveying plane in order to insert/extract the coupling portion into/from the groove.

Consequently, during the hooking/unhooking of the support to/from the carriage, the engagement element is kept in the non-operative position. There is no dragging of the engagement element in the support or in the carriage. The control means comprise: a first member which carries the engagement element, which is movable in the moving direction of the engagement element and which is pushed by a first elastic element to keep the engagement element in the operative position; a second member which is movable in a direction orthogonal to the moving direction of the engagement element between a first position, in which it does not interfere with the first member, and a second position, in which it interferes with the first member so that the first member compresses the first elastic element and the engagement element is in the non-operative position, in which the second member is kept in the first position by a second elastic element. In such embodiment, the step of maintaining the engagement element in the non-operative position preferably comprises the step of pressing and keeping pressed an access portion of the second member, which is arranged externally with respect to the carriage or the support, so that the second member is moved from the first position to the second position. Moreover, still in such embodiment, the step of moving the engagement element into the operative position for hooking the support and the carriage comprises the step of releasing the access portion of the second member.

Advantageously, the access portion allows controlling the position of the engagement element in a practical and quick manner.

The claims describe preferred embodiments of the present invention constituting an integral part of the present description.

### BRIEF DESCRIPTION OF THE DRAWINGS

The present invention will now be described with reference to the accompanying drawings, which illustrate a non-limiting embodiment example thereof, wherein:
- Figure 1 is a perspective view of a transport apparatus object of the present invention;
- Figure 2 is an enlarged rear detail, in a front view, of part of the apparatus of Figure 1;
- Figure 3 is a side view of the carriage and of the support of the apparatus of Figure 1 in which the guide is shown in cross-section;
- Figure 4 is a perspective view of the carriage and of the support of the apparatus of Figure 1;

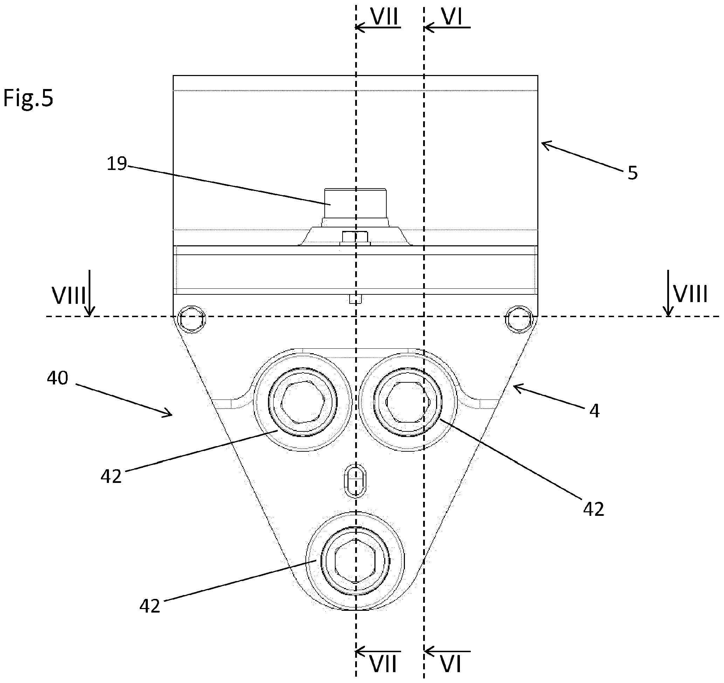

- Figure 5 is a front view of the rear of the carriage and of the support of the apparatus of Figure 1;
- Figure 6 is a sectional view of Figure 5, along the section VI-VI;
- Figure 7 is a sectional view of Figure 5, along the section VII-VII, in which the support has been omitted;
- Figure 8 is a perspective sectional view of Figure 5, along the section VIII-VIII, in which the support has been omitted;
- Figure 9 is a view analogous to that of Figure 8, in which the engagement elements are in the non-operative position;
- Figure 10 is a top perspective view of the carriage and of the support during a coupling step;
- Figures 11a-11c are schematic plan views of the carriage and of the drawer, in which some parts have been omitted to better highlight others, which illustrate the hooking sequence of the support to the carriage;
- Figures 12a-12c are cross-section views of Figures 11a-11c respectively , along the section XII-XII.

### PREFERRED EMBODIMENTS OF THE INVENTION

With reference to the accompanying figures, reference numeral 1 indicates, as a whole, a transport apparatus for containers object of the present invention.

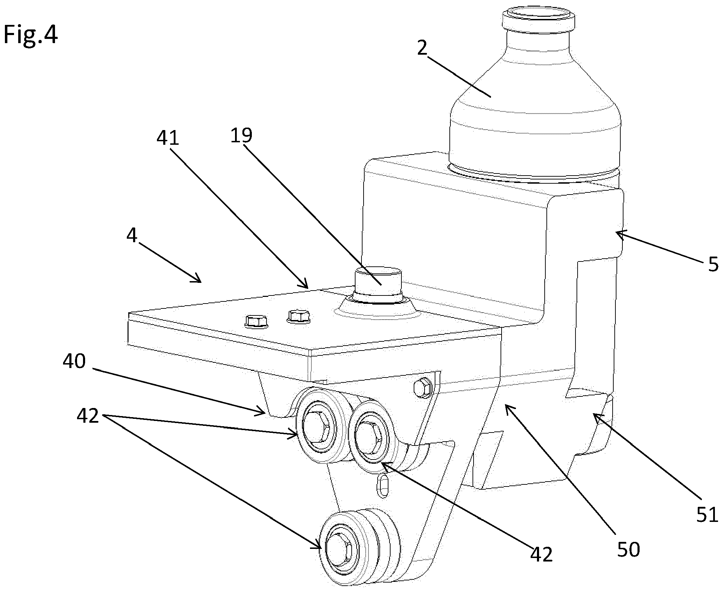

With reference to Figure 4, a container 2 which can be used in the transport apparatus 1 is illustrated. In particular, such container 2 is a container of the pharmaceutical sector which is bottle-shaped and made of a plastic material. Such container 2 is intended to be filled, for example with a liquid, stopped by means of a rubber stopper and finally crimped.

It is understood that the transport apparatus 1 object of the present invention can be used with containers 2 which have a different shape and/or size and/or material than that illustrated in Figure 4.

For example, the transport apparatus 1 object of the present invention can be used with glass containers of the pharmaceutical sector such as, for example, phials, bottles, carpules, syringes.

As a further alternative, the transport apparatus 1 object of the present invention can be used with containers of the tobacco industry such as, for example, cartridges for electronic cigarettes.

The embodiment of the transport apparatus 1 illustrated in the figures is described in the following.

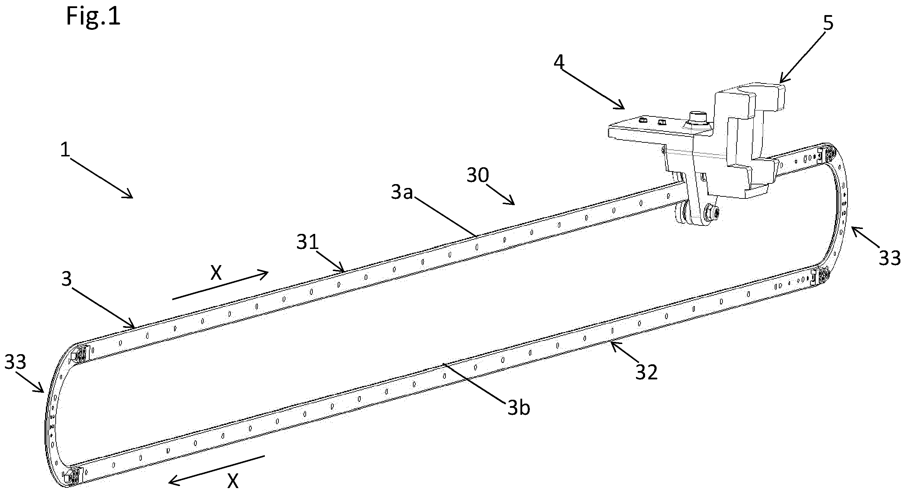

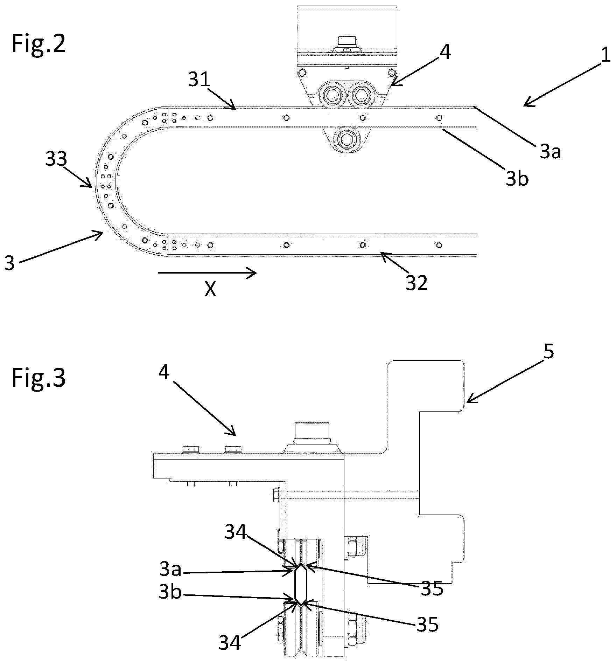

The transport apparatus 1 (with particular reference to Figures 1 and 2) comprises: a guide 3 which defines a conveying path 30; at least one carriage 4 which is coupled to the guide 3 for sliding along the guide 3 in a conveying direction X; a support 5 which retains at least one container 2 and which can be coupled in a removable manner to the carriage 4 through coupling means 6.

It is specified that one single carriage 4 and the relative support 5 are illustrated in the figures. However, the transport apparatus 1 can comprise a plurality of carriages 4 and a plurality of supports 5 which can be coupled in a removable manner one to each carriage 4.

Moreover, the carriage 4 can be coupled to the guide 3 in a removable manner. For example, the carriage 4 can be removed for maintenance operations or washing/sterilizing procedures of the carriage or of the entire transport apparatus 1. Alternatively, the carriage 4 can be coupled in a permanent manner to the guide 3.

The guide 3 is shaped to comprise a first guide profile 3a and a second guide profile 3b which are arranged parallel to one another and which have a progression such to comprise at least one rectilinear section and at least one curvilinear section. With reference to Figure 1, the guide 3 is an annular guide (consequently, the conveying path 30 defined by the guide 3 is a closed-loop path) and comprises a first rectilinear section 31, a second rectilinear section 32 which is opposite and parallel to the first section 32 and two connecting sections 33 which are curved and which join the first section 31 and the second section 32.

With further reference to Figure 1, the guide 3 is arranged in a vertical conveying plane. Moreover, the first section 31 and the second section 32 are horizontal and the first section 31 is arranged above the second section 32.

Preferably, the first guide profile 3a and the second guide profile 3b each comprise a first rolling wall 34 and a second rolling wall 35 which are arranged tilted with respect to one another (Figure 3).

The carriage 4 comprises a main body (made, for example, of a plastic material) having a first portion 40 for the coupling of the carriage 4 to the guide 3 and a second portion 41 for the coupling of the carriage 4 to the support 5. In particular, such second portion 41 comprises a coupling surface 41a which is intended, in use, to be facing and arranged in contact with the support 5.

The carriage 4, in order to slide along the guide 3, comprises a plurality of rolling elements 42. With reference to Figures 2-4, the carriage 4 comprises three rolling elements 42 which are arranged according to the vertexes of a triangle. The rotation axis of each rolling element 42 is thus parallel to the others (and orthogonal to the conveying plane of the guide 3). Moreover, the rolling elements 42 are arranged so as to be fixed with respect to one another; in other words, the distance between the respective rotation axes of the rolling elements 42 is fixed.

In particular, the carriage 4 comprises a pair of rolling elements 42 which roll along the first guide profile 3a and a single rolling element 42 which rolls along the second guide profile 3b. Advantageously, this arrangement of the rolling elements 42 allows having a good stability of the carriage 4 along the guide 3, also at the curvilinear sections.

It is understood that, alternatively, the carriage 4 could include, for example, four rolling elements 42, one of which possibly movable with respect to the others. As a further alternative, the carriage 4 could provide that at least one of the rolling elements 42 is movable with respect to the others.

With particular reference to Figure 3, each rolling element 42 comprises a first rolling surface and a second rolling surface which are arranged tilted with respect to one another for rotating respectively on the first rolling wall 34 and on the second rolling wall 35 of the first guide profile 3a or of the second guide profile 3b. Advantageously, such shape of the guide 3 and of the rolling elements 42 improves the stability of the carriage 4 on the guide 3.

The support 5 comprises a main body (made, for example, of a plastic material) having a first portion 50 for the coupling of the support 5 to the carriage 4 and a second portion 51 for retaining the container 2.

The first portion 50 of the support 5 comprises, in particular, a coupling surface 50a which is intended, in use, to be facing and arranged in contact with the carriage 4, in particular with the coupling surface 41a of the second portion 41 of the carriage 4.

With reference to Figure 1, the second portion 51 of the support 5 is, on the other hand, shaped to support a (single) container 2 by means of a support base and side panels.

Alternatively, the second portion 51 could be shaped so as to support two or more containers 2. As a further alternative, the second portion 51 could be shaped to receive, resting thereon, the containers 2 (analogously to what illustrated) or to grasp (for example with grippers) the containers 2.

The transport apparatus 1 comprises, moreover, movement means for moving the carriage 4 along the guide 3. Such movement means, as they do not form part of the invention and are known to those skilled in the art, are neither illustrated nor described in detail in the following. Such movement means can include, for example, drive belts or other drive units such as linear motors and the like.

The transport apparatus 1 comprises coupling means 6 for removably coupling the support 5 and the carriage 4.

The removable coupling means 6 comprise a housing 7 and an engagement element 8 which are mutually shaped so that at least a portion of the engagement element 8 can be inserted in the housing7.

The engagement element 8 is housed in a relative seat 9 formed in the carriage 4 and is movable between an operative position A, in which the engagement element 8 protrudes from the seat 9 to be able to engage the housing 7 formed in the support 5, and a non-operative position B, in which the engagement element 8 is arranged retracted inside the seat 9.

Moreover, the transport apparatus 1 comprises control means 10 for controlling the engagement element 8 in order to move the engagement element 8 between the operative position A and the non-operative position B.

Consequently, the transport apparatus 1 object of the present invention allows controlling the position of the engagement element 8: during the hooking/unhooking steps of the support 5 to/from the carriage 4, the engagement element 8 is kept in the non-operative position B so as not to drag in the support 5. Advantageously, the proposed transport apparatus 1 allows hooking/unhooking the support 5 to/from the carriage 4 in a rapid manner and without dragging so as to limit the problems of wear and formation of polluting dust. As a further advantage, the proposed transport apparatus 1 allows carrying out a change of size in a rapid and simple manner.

The engagement element 8 is shaped as a pin. In other words, the engagement element 8 is an element having a longitudinal development and with an end portion intended to be inserted in the housing 7.

With reference to the embodiment illustrated in the figures, the housing 7 is integral with the support 5 and the engagement element 8 is housed in the seat 9 formed in the carriage 4. Advantageously, such embodiment is thus particularly convenient for hooking/unhooking the carriage 4 to/from the support 5. Specifically, the housing 7 is arranged at the coupling surface 51a of the first portion 51 of the support 5. On the other hand, the engagement element 8 is housed in the seat 9 so as to protrude, when it is in the operative position A, from the coupling surface 41a of the second portion 41 of the carriage 4.

Preferably, with reference to Figure 6, the coupling means 6 comprise a reinforcing element 11 integral with the support 5 and at which the housing 7 is formed.

In particular, such reinforcing element 11 is made of a more rigid and/or more wear-resistant material with respect to the material of which the main body of the support 5 is made. For example, the reinforcing element 11 could be made of a metal material.

Advantageously, the wear resistance of the transport apparatus 1 object of the present invention is thus further improved.

Preferably, the reinforcing element 11 and the engagement element 8 are made of the same material (for example, such material can be a metal material). Preferably, the portion of the engagement element 8 which can be inserted in the housing 7 and the housing 7 are counter-shaped.

Advantageously, the hooking of the carriage 4 and of the support 5 in the working position when the mentioned portion of the engagement element 8 is inserted in the housing 7 is thus improved.

With particular reference to Figure 6, the portion of the engagement element 8 which can be inserted in the housing 7 and the housing 7 each comprise a conic coupling surface 7a, 8a (alternatively, such coupling surface 7a, 8a could be truncated-conical).

Advantageously, such conical or truncated-conical shape of the coupling surface 7a, 8a allows an automatic centring of the engagement element 8 in the housing 7 when said engagement element 8 is moved from the non-operative position B to the operative position A.

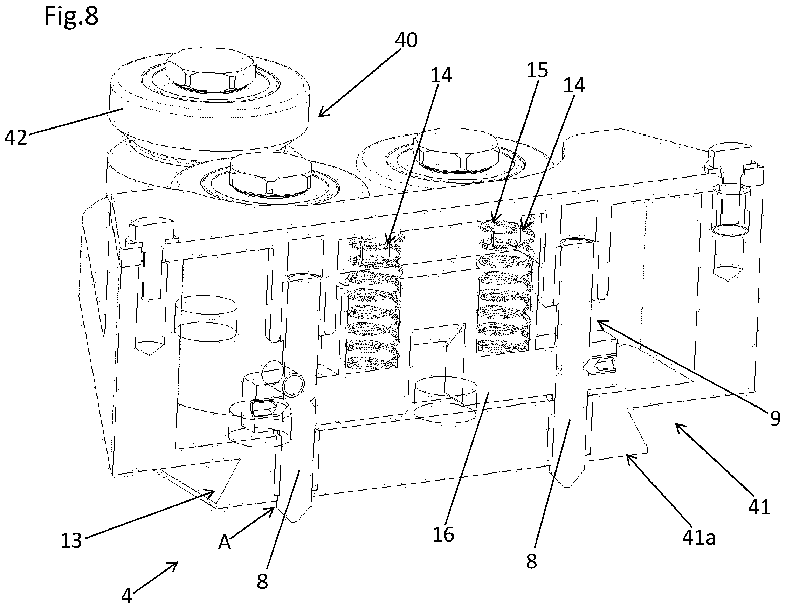

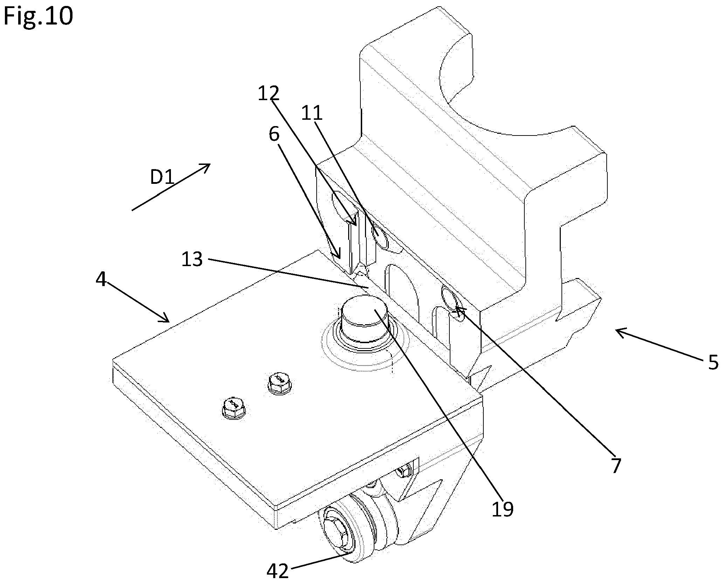

With particular reference to Figures 8-10, the coupling means 6 comprise a groove 12 which is formed in the support 5 and a coupling portion 13 which protrudes from the carriage 4 to engage in the groove 12.

Specifically, the groove 12 and the coupling portion 13 are mutually shaped so that the coupling portion 13 can be inserted in the groove 12 for constraining the carriage 4 and the support 5 in a first direction D1 which is orthogonal to the conveying plane in which the guide 3 lies and in a second direction D2 which is parallel to the conveying direction X.

Consequently, such groove 12 and such coupling portion 13 allow safely constraining the carriage 4 and the support 5 with respect to one another along the first direction D1 and along the second direction D2; the engagement element 8 and the housing 7, instead, allow constraining the carriage 4 and the support 5 along the direction parallel to the conveying plane in which the guide 3 lies.

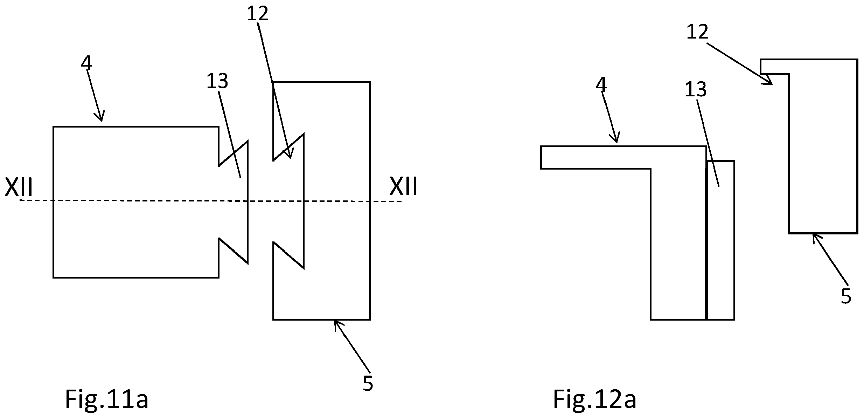

With reference to Figures 11a-11c and 12a-12c, the hooking of the support 5 to the carriage 4 is described schematically.

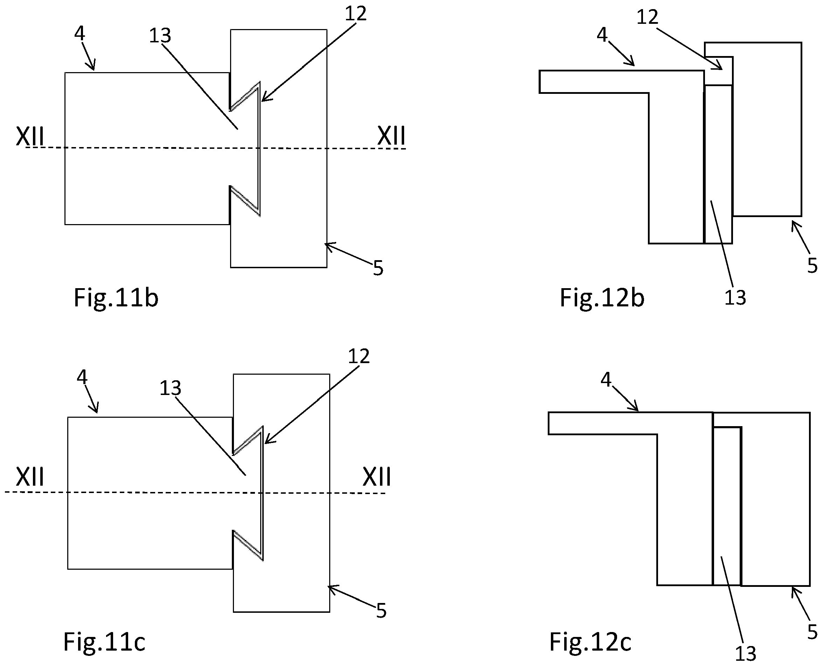

In such preferred embodiment, in order to allow the coupling between the groove 12 and the coupling portion 13, the support 5 is moved close to the carriage 4 so that the coupling surface 51a of the support 5 and the coupling surface 41a of the carriage 4 face one another (Figures 11a and 12a). Subsequently, the coupling surfaces 41a, 51a of the carriage 4 and of the support 5 are arranged in contact with one another (Figures 11b and 12b) and the support 5 is moved (vertically) in the plane parallel to the conveying plane of the guide 3 for inserting the coupling portion 13 of the carriage 4 into the groove 12 of the support 5 (Figures 11c and 12c). During such step, in which the coupling surfaces 41a, 51a drag at least partly with respect to one another, the engagement element 8 is kept in the non-operative position B. Finally, when the engagement element 8 faces the housing 7, it is then moved into the operative position A.

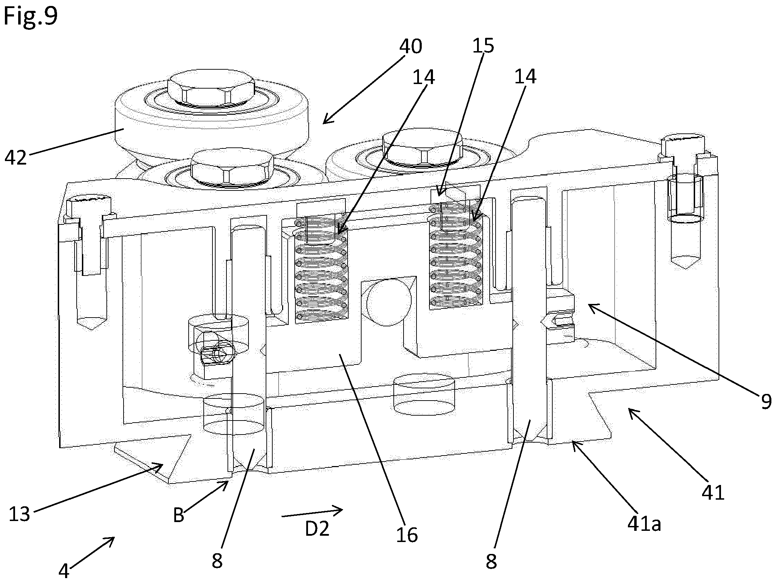

With particular reference to Figures 8 and 9, the engagement element 8 is movable perpendicularly with respect to the conveying plane of the guide 3. In other words, the engagement element 8 is movable horizontally.

The control means 10 are carried by the support 5 or by the carriage 4. In the figures, the control means are carried by the carriage 4 (and the seat 9 for housing the engagement element 8 is formed in the carriage 4).

The control means 10 illustrated in the figures is described in the following.

The control means 10 comprise a first elastic element 14 (for example, a spring) which has a development axis parallel to the moving direction Y of the engagement element 8 and which has a first end arranged in contact with a fixed abutment 15 and a second end which pushes the engagement element 8 into the operative position A.

Moreover, the control means 10 comprise: a first member 16 which carries the engagement element 8, which is movable in the moving direction Y of the engagement element 8 and which is pushed by the first elastic element 14 to keep the engagement element 8 in the operative position A; a second member 17 which is movable in a direction orthogonal to the moving direction Y of the engagement element 8 between a first position C, in which it does not interfere with the first member 16, and a second position, in which it interferes with the first member 16 so that the first member 16 compresses the first elastic element 14 and the engagement element 8 is in the non-operative position B.

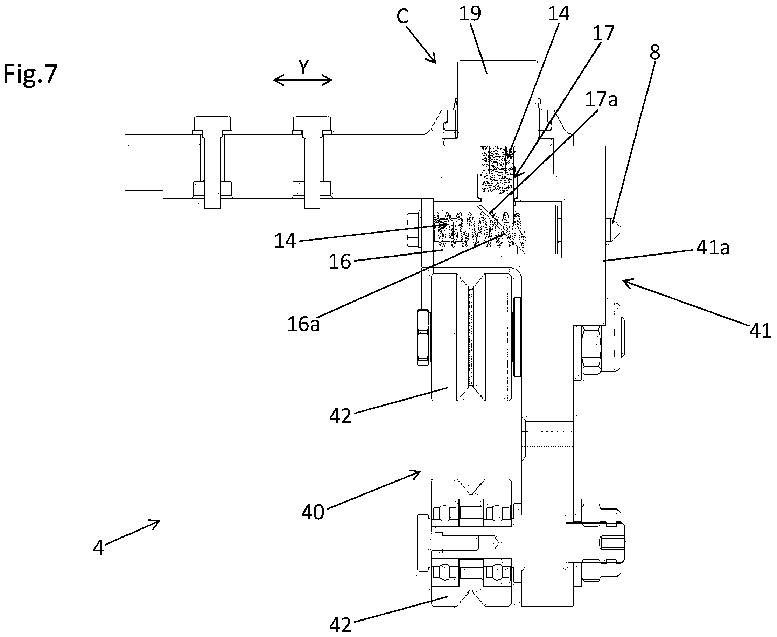

Moreover, the control means 10 comprise a second elastic element 18 (for example, a spring which has a development axis orthogonal to the moving direction Y of the engagement element 8 and which acts on the second member 17 to keep it in the first position C (Figure 7).

The first member 16 and the second member 17 each comprise an interference surface 16a, 17a which is tilted and, when the second member 17 is in the second position, the interference surface 17a of the second member 17 abuts the interference surface 16a of the first member 16. In other words, the first member 16 and the second member 17 each comprise a wedge-shaped portion.

With further reference to Figure 7, the second member 17 comprises an access portion 19 which is arranged externally with respect to the carriage 4 and which is accessible by an operator so that, by pressing the access portion 19, the second member 17 is moved from the first position C to the second position and, by releasing the access portion 19, the second member 17 is pushed by the second elastic element 18 into the first position C.

Consequently, a user, by simply pressing the access portion 19, moves the engagement element 8 from the operative position A to the non-operative position B, and vice versa.

With particular reference to Figures 8 and 9, the coupling means 6 comprise a pair of engagement elements 8 and a pair of housings 7. It is understood that what described in the foregoing with reference to an engagement element 8 and the relative housing 7 is also valid for the other engagement element 8 and the other housing 7.

Advantageously, the use of a pair of engagement elements 8 and housings 7 ensures a better coupling of the support 5 to the carriage 4.

In particular, the engagement elements 8 of the pair of engagement elements 8 are movable in moving directions which are parallel to one another.

Moreover, the pair of engagement elements 8 is moved simultaneously by control means 10 which act simultaneously on both engagement elements 8.

Specifically, the first member 16 is shaped to carry both engagement elements 8. Preferably, the control means 10 comprise a pair of first elastic elements 14 which push the first member 16 so as to maintain the pair of engagement elements 8 in the operative position A.

According to an embodiment not illustrated, the housing 7 could be integral with the carriage 4 and the engagement element 8 could be housed in the seat 9 formed in the support 5.

In such case, the reinforcing element 11 would be integral with the carriage 4. According to a further embodiment not illustrated, the coupling means 6 can comprise a groove 12 which is formed in the carriage 4 and a coupling portion 13 which protrudes from the support 5 to engage the groove 12 of the carriage 4.

It is understood that what described with reference to the embodiment illustrated in the figures also remains valid for the alternative embodiments not illustrated. The method for hooking/unhooking the support 5 for containers 2 to/from a carriage 4 is described in the following with reference to the illustrated figures, in which method: the support 5 and the carriage 4 can be coupled in a removable manner by means of coupling means 6 comprising a housing 7 and an engagement element 8 which are mutually shaped so that at least a portion of the engagement element 8 can be inserted into the housing 7; the engagement element 8 is housed in a relative seat 9 formed in the carriage 4 and is movable between an operative position A, in which the engagement element 8 protrudes from the seat 9 to be able to engage the housing 7 formed in the support 5, and a non-operative position B, in which the engagement element 8 is arranged retracted inside the seat 9. The method comprises the steps of:
- moving close/moving away the support 5 and the carriage 4 from each other, keeping the engagement element 8 in the non-operative position B, respectively to hook/unhook the support 5 and the carriage 4;
- subsequently, to hook the support 5 and the carriage 4, moving the engagement element 8 into the operative position A.

Consequently, the position of the engagement element 8 is controlled and is kept in the non-operative position B during the steps of hooking/unhooking the support 5 to/from the carriage 4. Advantageously, the proposed method allows hooking/unhooking the support 5 to/from the carriage 4 in a rapid manner and with no dragging of the engagement element 8 so as to limit the problems of wear and formation of polluting dust.

In particular, the step of moving the support 5 and the carriage 4 close to one another comprises the step of arranging the support 5 and the carriage 4 with respect to one another so that the relative coupling surfaces 50a, 41a are facing each other.

In the case where the coupling means 6 comprise the groove 12 formed in the support 5 and the coupling portion 13 protruding from the carriage 4, then the step of moving close/moving away the support 5 and the carriage 4 from each other, keeping the engagement element 8 in the non-operative position B comprises the step of moving the support 5 and the carriage 4 with respect to one another in a direction parallel to the conveying path in which the guide 3 lies to insert/extract the coupling portion 13 into/from the groove 12. Advantageously, an optimal coupling of the carriage 4 and the support 5 with no dragging of the engagement element 8 against the support 5 is achieved. Moreover, in the embodiment in which the second member 17 of the control means 10 comprises the access portion 19, then the step of keeping the engagement element 8 in the non-operative position B comprises the step of pressing and keeping pressed said access portion 19 of the second member 17. Analogously, the step of moving the engagement element 8 into the operative position A in order to hook the support 5 and the carriage 4 comprises the step of releasing the access portion 19 of the second member 17.

Advantageously, the control of the position of the engagement element 8 is thus extremely simple and easy.

It is understood that, in the case where the housing 7 is integral with the carriage 4 and the engagement element 8 is housed in the seat 9 formed in the support 5, the steps of the method for hooking/unhooking the support 5 to/from the carriage 4 are analogous. This is also the case when the groove 12 is formed in the carriage 4 and the coupling portion 13 protrudes from the support 5.

Moreover, a packaging machine (not illustrated) for packaging containers 2 is also the object of the present invention, said packaging machine comprising: an entry station for the entry of a plurality of containers 2; a transport apparatus 1 according to any one of the embodiments described above, which transport apparatus 1 is arranged downstream of the entry station; an exit station for the exit of the containers 2, which exit station is arranged downstream of the transport apparatus 1; at least one operating station arranged at the transport apparatus 1 for performing an operation on the containers 2 transported by said transport apparatus 1.

In particular, the operating station can be a station for filling the containers 2, a station for stopping the containers 2 or a station for crimping the containers 2. Specifically, the operating station is arranged at the first rectilinear section 31 of the guide 3.

## Claims

1. A transport apparatus (1) for containers (2), comprising:
• a guide (3) which defines a conveying path (30);
• a carriage (4) which is coupled to the guide (3) to slide along the guide (3) in a conveying direction (X);
• a support (5) which retains at least one container (2) and which can be coupled in a removable manner to the carriage (4) through coupling means (6);
• coupling means (6) for removably coupling the support (5) and the carriage (4), which removable coupling means (6) comprise a housing (7) and an engagement element (8) which are mutually shaped so that at least a portion of the engagement element (8) can be inserted into the housing (7); wherein the engagement element (8) is housed in a relative seat (9) formed in the carriage (4) or in the support (5) and is movable between an operative position (A), in which the engagement element (8) protrudes from the seat (9) to be able to engage the housing (7) formed in the support (5) or in the carriage (4), and a non-operative position (B), in which the engagement element (8) is arranged retracted inside the seat (9); and
• control means (10) of the engagement element (8) to move the engagement element (8) between the operative position (A) and the non-operative position (B);
wherein the control means (10) comprise a first elastic element (14) which has a development axis parallel to the moving direction (Y) of the engagement element (8) and which has a first end in contact with a fixed abutment (15) and a second end which pushes the engagement element (8) to the operative position (A);
the transport apparatus (1) is **characterized in that** the control means (10) comprise:
• a first member (16) which carries the engagement element (8), which is movable in the moving direction (Y) of the engagement element (8) and which is pushed by the first elastic element (14) to maintain the engagement element (8) in the operative position (A); and
• a second member (17) which is movable in a direction orthogonal to the moving direction (Y) of the engagement element (8) between a first position (C), in which it does not interfere with the first member (16), and a second position, in which it interferes with the first member (16) so that the first member (16) compresses the first elastic element (14) and the engagement element (8) is in the non-operative position (B).

2. The transport apparatus (1) according to claim 1, wherein the coupling means (6) comprise a reinforcing element (11) integral with the carriage (4) or the support (5) and at which the housing is formed (7).

3. The transport apparatus (1) according to any one of the preceding claims, wherein the portion of the engagement element (8) which can be inserted in the housing (7) and the housing (7) are counter-shaped.

4. The transport apparatus (1) according to any one of the preceding claims, wherein the portion of the engagement element (8) which can be inserted in the housing (7) and the housing (7) each comprise a coupling surface (7a, 8a) which is conical or truncated-conical.

5. The transport apparatus (1) according to any one of the preceding claims,
wherein the coupling means (6) comprise a groove (12) which is formed in the carriage (4) or in the support (5) and a coupling portion (13) which protrudes respectively from the support (5) or from the carriage (4) to engage in the groove (12); and
wherein the groove (12) and the coupling portion (13) are mutually shaped so that the coupling portion (13) can be inserted in the groove (12) to constrain the carriage (4) and the support (5) in a first direction (D1) which is orthogonal to the conveying plane in which the guide (3) lies and in a second direction (D2) which is parallel to the conveying direction (X).

6. The transport apparatus (1) according to any one of the preceding claims, wherein the first member (16) and the second member (17) each comprise an interference surface (16a, 17a) which is tilted and, when the second member (17) is in the second position, the interference surface (17a) of the second member (17) abuts the interference surface (16a) of the first member (16).

7. The transport apparatus (1) according to any one of the preceding claims, wherein the control means (10) comprise a second elastic element (18) which has a development axis orthogonal to the moving direction (Y) of the engagement element (8) and which acts on the second member (17) to maintain it in the first position (C).

8. The transport apparatus (1) according to claim 7, wherein the second member (17) comprises an access portion (19) which is arranged externally with respect to the carriage (4) or the support (5) and which is accessible by an operator so that, pressing the access portion (19), the second member (17) is moved from the first position (C) to the second position and, releasing the access portion (19), the second member (17) is pushed by the second elastic element (18) in the first position (C).

9. The transport apparatus (1) according to any one of the preceding claims, wherein the housing (7) is integral with the support (5) and the engagement element (8) is housed in the seat (9) formed in the carriage (4).

10. A method to hook/unhook the support (5) for containers (2) of the transport apparatus (1) according to any one of the preceding claims to/from the carriage (4) and comprising the steps of:
• move close/move away the support (5) and the carriage (4) from each other, keeping the engagement element (8) in the non-operative position (B) so as not to drag in the support (5), respectively to hook/unhook the support (5) and the carriage (4);
• subsequently, to hook the support (5) and the carriage (4), move the engagement element (8) to the operative position (A).

11. A packaging machine for packaging containers (2), comprising:
an entry station for the entry of a plurality of containers (2);
a transport apparatus (1) according to any one of claims from 1 to 9, wherein the transport apparatus (1) is arranged downstream of the entry station;
an exit station for the exit of the containers (2), which exit station is located downstream of the transport apparatus (1);
at least one operating station arranged at the transport apparatus (1) to perform an operation on the containers (2) transported by said transport apparatus (1).

## Patentansprüche

1. Transportvorrichtung (1) für Behälter (2), umfassend:
• eine Führung (3), die einen Förderweg (30) definiert;
• einen Schlitten (4), der an die Führung (3) gekoppelt ist, um entlang der Führung (3) in einer Förderrichtung (X) zu gleiten;
• einen Träger (5), der mindestens einen Behälter (2) festhält und der durch Kopplungsmittel (6) in einer lösbaren Weise mit dem Schlitten (4) verbunden werden kann;
• Kopplungsmittel (6) zum lösbaren Koppeln des Trägers (5) und des Schlittens (4), wobei die lösbaren Kopplungsmittel (6) ein Gehäuse (7) und ein Eingriffelement (8) umfassen, die zueinander derart geformt sind, dass zumindest ein Abschnitt des Eingriffelements (8) in das Gehäuse (7) eingesetzt werden kann; wobei das Eingriffelement (8) in einem relativen Sitz (9), der in dem Schlitten (4) oder in dem Träger (5) gebildet ist, untergebracht ist und zwischen einer Betriebsposition (A), in der das Eingriffelement (8) aus dem Sitz (9) herausragt, um mit dem Gehäuse (7), das in dem Träger (5) oder in dem Schlitten (4) gebildet ist, in Eingriff treten zu können, und einer Nicht-Betriebsposition (B), in der das Eingriffelement (8) zurückgezogen in dem Sitz (9) angeordnet ist, bewegbar ist; und
• Steuermittel (10) des Eingriffelements (8), um das Eingriffelement (8) zwischen der Betriebsposition (A) und der Nicht-Betriebsposition (B) zu bewegen;
wobei die Steuermittel (10) ein erstes elastisches Element (14) umfassen, das eine Entwicklungsachse parallel zu der Bewegungsrichtung (Y) des Eingriffelements (8) aufweist und das ein erstes Ende, das sich in Kontakt mit einem festen Anschlag (15) befindet, und ein zweites Ende, das das Eingriffelement (8) in die Betriebsposition (A) drückt, aufweist;
wobei die Transportvorrichtung (1) **dadurch gekennzeichnet ist, dass** die Steuermittel (10) umfassen:
• ein erstes Element (16), das das Eingriffelement (8) trägt, das in die Bewegungsrichtung (Y) des Eingriffelements (8) bewegbar ist, und das durch das erste elastische Element (14) gedrückt wird, um das Eingriffelement (8) in der Betriebsposition (A) zu halten; und
• ein zweites Element (17), das in einer Richtung orthogonal zu der Bewegungsrichtung (Y) des Eingriffelements (8) zwischen einer ersten Position (C), in der es nicht mit dem ersten Element (16) wechselwirkt, und einer zweiten Position, in der es mit dem ersten Element (16) derart wechselwirkt, dass das erste Element (16) das erste elastische Element (14) komprimiert und das Eingriffelement (8) in der Nicht-Betriebsposition (B) ist, bewegbar ist.

2. Transportvorrichtung (1) nach Anspruch 1, wobei die Kopplungsmittel (6) ein Verstärkungselement (11) umfassen, das mit dem Schlitten (4) oder dem Träger (5) integral gebildet ist und an dem das Gehäuse (7) gebildet ist.

3. Transportvorrichtung (1) nach einem der vorhergehenden Ansprüche, wobei der Abschnitt des Eingriffelements (8), der in das Gehäuse (7) eingesetzt werden kann, und das Gehäuse (7) gegengeformt sind.

4. Transportvorrichtung (1) nach einem der vorhergehenden Ansprüche, wobei der Abschnitt des Eingriffelements (8), der in das Gehäuse (7) eingesetzt werden kann, und das Gehäuse (7) jeweils eine Kopplungsfläche (7a, 8a) umfassen, die kegelförmig oder kegelstumpfförmig ist.

5. Transportvorrichtung (1) nach einem der vorhergehenden Ansprüche, wobei die Kopplungsmittel (6) eine Nut (12), die in dem Schlitten (4) oder in dem Träger (5) gebildet ist, und einen Kopplungsabschnitt (13), der von dem Träger (5) bzw. von dem Schlitten (4) vorsteht, um in die Nut (12) einzugreifen, umfassen; und
wobei die Nut (12) und der Kopplungsabschnitt (13) gegenseitig derart geformt sind, dass der Kopplungsabschnitt (13) in die Nut (12) eingesetzt werden kann, um den Schlitten (4) und den Träger (5) in einer ersten Richtung (D1), die senkrecht zu der Förderebene ist, in der die Führung (3) liegt, und in einer zweiten Richtung (D2), die parallel zu der Förderrichtung (X) ist, zu begrenzen.

6. Transportvorrichtung (1) nach einem der vorhergehenden Ansprüche, wobei das erste Element (16) und das zweite Element (17) jeweils eine Wechselwirkungsfläche (16a, 17a) umfassen, die geneigt ist, und wobei dann, wenn sich das zweite Element (17) in der zweiten Position befindet, die Wechselwirkungsfläche (17a) des zweiten Elements (17) an der Wechselwirkungsfläche (16a) des ersten Elements (16) anliegt.

7. Transportvorrichtung (1) nach einem der vorhergehenden Ansprüche, wobei die Steuermittel (10) ein zweites elastisches Element (18) umfassen, das eine Entwicklungsachse senkrecht zu der Bewegungsrichtung (Y) des Eingriffelements (8) aufweist und das auf das zweite Element (17) wirkt, um es in der ersten Position (C) zu halten.

8. Transportvorrichtung (1) nach Anspruch 7, wobei das zweite Element (17) einen Zugangsabschnitt (19) umfasst, der außerhalb des Schlittens (4) oder des Trägers (5) angeordnet ist, und der für einen Bediener derart zugänglich ist, dass durch Pressen des Zugangsabschnitts (19) das zweite Element (17) von der ersten Position (C) in die zweite Position bewegt wird, und durch Lösen des Zugangsabschnitts (19) das zweite Element (17) durch das zweite elastische Element (18) in die erste Position (C) gedrückt wird.

9. Transportvorrichtung (1) nach einem der vorhergehenden Ansprüche, wobei das Gehäuse (7) integral mit dem Träger (5) gebildet ist und das Eingriffelement (8) in dem Sitz (9), der in dem Schlitten (4) gebildet ist, aufgenommen ist.

10. Verfahren zum Ein- bzw. Aushaken des Trägers (5) für Behälter (2) der Transportvorrichtung (1) nach einem der vorhergehenden Ansprüche an dem bzw. von dem Schlitten (4) und umfassend die Schritte:
• Annähern bzw. voneinander Entfernen des Trägers (5) und des Schlittens (4), wobei das Eingriffelement (8) in der Nicht-Betriebsposition (B) gehalten wird, um nicht in dem Träger (5) zu schleifen, um den Träger (5) und den Schlitten (4) ein- bzw. auszuhaken;
• anschließend, um den Träger (5) und den Schlitten (4) einzuhaken, Bewegen des Eingriffelements (8) in die Betriebsposition (A).

11. Verpackungsmaschine zum Verpacken von Behältern (2), umfassend:
eine Eingangsstation für den Eingang mehrerer Behälter (2);
eine Transportvorrichtung (1) nach einem der Ansprüche 1 bis 9, wobei die Transportvorrichtung (1) stromabwärts der Eingangsstation angeordnet ist;
eine Ausgangsstation für den Austritt der Behälter (2), wobei sich die Ausgangsstation stromabwärts der Transportvorrichtung (1) befindet;
mindestens eine Arbeitsstation, die in der Transportvorrichtung (1) angeordnet ist, um einen Vorgang an den Behältern (2), die von der Transportvorrichtung (1) transportiert werden, durchzuführen.

## Revendications

1. Appareil de transport (1) pour contenants (2) comprenant :
• un guide (3) qui définit un parcours de transport (30) ;
• un chariot (4) qui est couplé au guide (3) pour coulisser le long du guide (3) dans une direction de transport (X) ;
• un support (5) qui retient au moins un contenant (2) et qui peut être couplé, d'une manière amovible, au chariot (4) par des moyens de couplage (6) ;
• des moyens de couplage (6) pour coupler, de manière amovible, le support (5) et le chariot (4), lesquels moyens de couplage amovibles (6) comprennent un logement (7) et un élément de mise en prise (8) qui sont mutuellement formés de sorte qu'au moins une partie de l'élément de mise en prise (8) peut être insérée dans le logement (7) ; dans lequel l'élément de mise en prise (8) est logé dans un siège (9) relatif formé dans le chariot (4) ou dans le support (5) et est mobile entre une position opérationnelle (A), dans laquelle l'élément de mise en prise (8) fait saillie du siège (9) pour pouvoir mettre en prise le logement (7) formé dans le support (5) ou dans le chariot (4) et une position non opérationnelle (B), dans laquelle l'élément de mise en prise (8) est agencé rétracté à l'intérieur du siège (9) ; et
• des moyens de commande (10) de l'élément de mise en prise (8) pour déplacer l'élément de mise en prise (8) entre la position opérationnelle (A) et la position non opérationnelle (B) ;
dans lequel les moyens de commande (10) comprennent un premier élément élastique (14) qui a un axe de développement parallèle à la direction de déplacement (Y) de l'élément de mise en prise (8) et qui a une première extrémité en contact avec une butée fixe (15) et une seconde extrémité qui pousse l'élément de mise en prise (8) dans la position opérationnelle (A) ; l'appareil de transport (1) est **caractérisé en ce que** les moyens de commande (10) comprennent :
• un premier élément (16) qui porte l'élément de mise en prise (8), qui est mobile dans la direction de déplacement (Y) de l'élément de mise en prise (8) et qui est poussé par le premier élément élastique (14) pour maintenir l'élément de mise en prise (8) dans la position opérationnelle (A) ; et
• un second élément (17) qui est mobile dans une direction orthogonale à la direction de déplacement (Y) de l'élément de mise en prise (8) entre une première position (C), dans laquelle il n'interfère pas avec le premier élément (16) et une seconde position, dans laquelle il interfère avec le premier élément (16) de sorte que le premier élément (16) comprime le premier élément élastique (14) et l'élément de mise en prise (8) est dans la position non opérationnelle (B).

2. Appareil de transport (1) selon la revendication 1, dans lequel les moyens de couplage (6) comprennent un élément de renforcement (11) solidaire avec le chariot (4) ou le support (5) et au niveau duquel le logement (7) est formé.

3. Appareil de transport (1) selon l'une quelconque des revendications précédentes, dans lequel la partie de l'élément de mise en prise (8) qui est insérable dans le logement (7) et le logement (7) sont formés de manière antagoniste.

4. Appareil de transport (1) selon l'une quelconque des revendications précédentes, dans lequel la partie de l'élément de mise en prise (8) qui est insérable dans le logement (7) et le logement (7) comprennent chacun une surface de couplage (7a, 8a) qui est conique ou tronconique.

5. Appareil de transport (1) selon l'une quelconque des revendications précédentes, dans lequel les moyens de couplage (6) comprennent une gorge (12) qui est formée dans le chariot (4) ou dans le support (5) et une partie de couplage (13) qui fait saillie respectivement du support (5) ou du chariot (4) pour se mettre en prise dans la gorge (12) ; et
dans lequel la gorge (12) et la partie de couplage (13) sont mutuellement formées de sorte que la partie de couplage (13) peut être insérée dans la gorge (12) afin de contraindre le chariot (4) et le support (5) dans une première direction (D1) qui est orthogonale au plan de transport dans lequel le guide (3) se trouve, et dans une seconde direction (D2) qui est parallèle à la direction de transport (X).

6. Appareil de transport (1) selon l'une quelconque des revendications précédentes, dans lequel le premier élément (16) et le second élément (17) comprennent chacun une surface d'interférence (16a, 17a) qui est inclinée et, lorsque le second élément (17) est dans la seconde position, la surface d'interférence (17a) du second élément (17) vient en butée contre la surface d'interférence (16a) du premier élément (16).

7. Appareil de transport (1) selon l'une quelconque des revendications précédentes, dans lequel les moyens de commande (10) comprennent un second élément élastique (18) qui a un axe de développement orthogonal à la direction de déplacement (Y) de l'élément de mise en prise (8) et qui agit sur le second élément (17) pour le maintenir dans la première position (C).

8. Appareil de transport (1) selon la revendication 7, dans lequel le second élément (17) comprend une partie d'accès (19) qui est agencée extérieurement par rapport au chariot (4) ou au support (5) et qui est accessible par un opérateur, de sorte que, en comprimant la partie d'accès (19), le second élément (17) est déplacé de la première position (C) à la seconde position et en libérant la partie d'accès (19), le second élément (17) est poussé par le second élément élastique (18) dans la première position (C).

9. Appareil de transport (1) selon l'une quelconque des revendications précédentes, dans lequel le logement (7) est solidaire avec le support (5) et l'élément de mise en prise (8) est logé dans le siège (9) formé dans le chariot (4).

10. Procédé pour accrocher/décrocher le support (5) pour contenants (2) de l'appareil de transport (1) selon l'une quelconque des revendications précédentes, au/du chariot (4) et comprenant les étapes suivantes :
• rapprocher/éloigner le support (5) et le chariot (4) l'un de l'autre, maintenant l'élément de mise en prise (8) dans la position non opérationnelle (B) afin de ne pas glisser dans le support (5), respectivement pour accrocher/décrocher le support (5) et le chariot (4) ;
• ensuite pour accrocher le support (5) et le chariot (4), déplacer l'élément de mise en prise (8) dans la position opérationnelle (A).

11. Machine d'emballage pour emballer des contenants (2) comprenant :
une station d'entrée pour l'entrée d'une pluralité de contenants (2) ;
un appareil de transport (1) selon l'une quelconque des revendications 1 à 9, dans laquelle l'appareil de transport (1) est agencé en aval de la station d'entrée ;
une station de sortie pour la sortie des contenants (2), laquelle station de sortie est positionnée en aval de l'appareil de transport (1) ;
au moins une station opérationnelle agencée au niveau de l'appareil de transport (1) pour réaliser une opération sur les contenants (2) transportés par ledit appareil de transport (1).
